# EUROPEAN PATENT SPECIFICATION

(11) **EP 0 689 307 B1**
(45) Date of publication and mention of the grant of the patent: **16.10.2002**
(21) Application number: 95108197.5
(22) Date of filing: 30.05.1995
(51) Int. Cl.: H04H 1/00

(54) **A digital broadcasting system and a receiver to be used in the system**
Digitales Rundfunksystem und Empfänger zur Anwendung darin
Système de radiodiffusion numérique et récepteur pour un tel système

(30) Priority: 16.06.1994 FI 942875
(43) Date of publication of application: 27.12.1995
(73) Proprietor: NOKIA TECHNOLOGY GmbH, 44807 Bochum (DE)
(72) Inventor: Erkkilä, Vesa, FIN-02610 Espoo (FI)
(74) Representative: Kupiainen, Juhani Kalervo

(56) References cited:
- WO-A-93/09615
- US-A- 3 831 095
- EBU REVIEW TECHNICAL, no. 246, April 1991 BRUSSELS, BE, pages 87-112, XP 000219708 G. PLENGE 'DAB, A new sound broadcasting system, Status of the development, Routes to its introduction'
- EBU REVIEW TECHNICAL, no. 255, 1993 BRUSSELS, BE, pages 57-63, 'Official EBU Technical Texts, EBU Expectations for first generation consumer DAB receivers.'

## Description

The invention relates to a digital broadcasting system and particularly to a digital broadcasting system utilizing Orthogonal Frequency Division Multiplexing (OFDM), and to a receiver to be used in this system.

The digital broadcasting systems in development, such as the European system known by the acronym DAB (Digital Audio Broadcasting), are intended for the distribution of high quality digital audio programs and data services on the VHF and UHF frequency ranges. The characteristics of the OFDM modulation method used in these systems is also well suited as the modulation method in a digital television system.

In a system using OFDM modulation the transmitted signal comprises a sequence of orthogonal carriers at regular intervals and adjacent to each other around a certain center frequency. The signal comprises sequential OFDM symbols, the time elements, during which the modulating phase is kept constant on all carriers, which form the total signal. The OFDM symbols are arranged in repeated transmission frames, which in the different parts of the frame typically contain several services, preferably audio programs to the transmitted, but possibly also other services, e.g. data services.

The above mentioned DAB system, and particularly the signal transmitted in it, is defined in the draft standard prETS 300401:1994 by ETSI. Below we will discuss in more detail some essential characteristics of said DAB system in order to illustrate the technical background of the invention. In the system the OFDM symbols are generated by D-QPSK keying, frequency interleaving, and frequency multiplexing of the D-QPSK signals. The transmission frame comprises a synchronization channel (2 OFDM symbols), an information channel, and a main service channel, which forms the largest part of the frame and contains a plurality of sub-channels, which can be combined to transmit the services. Three different transmission modes I, II and III are defined for the system, and the most important parameters of these are presented below in the table 1.

| **Parameter** | **Mode I** | **Mode II** | **Mode III** |
|---|---|---|---|
| OFDM symbols/frame | 76 | 76 | 153 |
| Number of carriers | 1536 | 384 | 192 |
| Length of frame | 96 ms | 24 ms | 24 ms |
| Length of symbol | 1.246 ms | 0.312 ms | 0.156 ms |
| Protection interval | 0.246 ms | 0.62 ms | 0.31 ms |
| Synchronization channel | 2.544 ms | 0.636 ms | 0.324 ms |

The transmission mode I is intended to be used basically on the VHF bands I, II and III, and particularly in so called single frequency networks (SFN networks), which we will discuss more closely below. The transmission mode II is intended to be used also on the 1500 MHz frequency band, both for terrestrial and satellite transmissions. The transmission mode III is intended to be used on the frequency band below 3000 MHz, both for terrestrial and satellite transmissions, and particularly also for cable transmissions.

The discussed system comprises as an essential part the fact that information about the frame configuration is transmitted in said information channel, whereby this information defines the services, service parts and sub-channels, and the relation between these. The transmitted signal, i.e. the total signal formed by carriers at regular intervals and adjacent to each other around a certain center frequency, and the services contained in the signal, also have own identifications, which unequivocally define them. The frame can further contain information identifying the transmitter, and different frequency information regarding a signal, a service, or regarding other signals of the system or e.g. FM services. The OFDM modulation method, and particularly the above mentioned transmission mode I are particularly well suited for the realization of the so called single frequency networks. Such a network is described in EBU Review Technical, no. 246, April 1991 Brussels, BE, pages 87-112.

In a single frequency network the same transmission frequency is used by all transmitters in a large area, and all transmitters transmit the same signal. With OFDM modulation it is possible to eliminate the negative effects of multi-path propagation, and instead to receive and utilize the signals which arrive from different stations on the same frequency. The signals coming from different stations in the single frequency network are added on the propagation path already before they are received, and form the OFDM signal to be received. All signals arriving in a receiver during the above mentioned protection interval will increase the quality of the received signal. Because in transmission mode I both the protection interval and the symbol are quite long, this transmission mode is best suited for single frequency networks. In order not to have too large delays in a receiver between signals from different transmitters there must be a sufficient transmitter density in a single frequency network. Those areas which are not completely served by the network's main transmitters can be served by add-in transmitters operating on the same frequency. The effect of the transmitting stations supporting each other may correspond to an increase in the transmission power, which is over ten decibels. In addition to this power benefit the single frequency networks naturally also achieve a good spectral efficiency, e.g. compared to the current FM modulated radio system.

In the realization of digital broadcasting systems, particularly single frequency networks, the main problem has been to find a suitable frequency range. Traditionally there is hardly no space for new networks on the frequency bands used for broadcasting operations or the VHF frequency bands I, II and III. However, the most efficient way to realize single frequency networks would be on particularly these frequency bands, because then it would be possible to use the transmission mode I, which is best suited for this purpose. It would require huge investments to free a continuous frequency range for large single frequency networks, because other transmitters operating in the desired frequency range would have to be moved to other frequencies.

Due to the difficult frequency situation in the VHF band several countries have thus proceeded to find other frequency bands, for instance around 1500 MHz. In many countries there would be rather good possibilities to build networks in this band. However, it is not possible to use the transmission mode I in this band. On the other hand, modes II and III will not tolerate as long delays between the signals as mode I. Thus the transmitter density would have be hugely higher than using the mode I, which would increase the building costs of the network.

One problem relating to broadcasting systems is also the distribution of regional and local programs. When the distribution is realized in a single frequency network it would also be necessary to distribute the programs in those areas to which they were not really intended, because e.g. five or six programs at a time are transmitted in the signal, and because the signals transmitted by different transmitters in the single frequency network must be exactly equal in order to avoid interference.

The problems discussed above can be solved by the digital broadcasting system according to the invention which utilizes OFDM modulation, and which is characterized by what is presented in claim 1. According to the invention a plurality of frequencies are assigned to the digital broadcasting system, and each transmitter in its transmission area transmits at a frequency selected among this plurality which can be freely used in this transmission area. The transmitters transmit OFDM signals having a similar frame structure and having preferably the same modulation in the same sections of the frame structure. A receiver of the system has means to receive such OFDM signals from a plurality of transmitters at several different frequencies simultaneously, either adding these signals or substantially continuously alternating between them. The multi-frequency system of the invention could for instance be an entity formed by a plurality of smaller single frequency networks, an entity formed by separate transmitters operating on different frequencies, or a single frequency network where some of the transmitters are replaced by transmitters operating on another frequency.

A receiver of the digital broadcasting system according to the invention is characterized in that it receives the same service simultaneously at a plurality of frequencies and adds the signals received at different frequencies, or that it rapidly shifts the frequency and picks up the desired service at the frequency providing the best signal to noise ratio at that moment.

Below the invention is described in detail with reference to the enclosed drawings, in which:
Figure 1 presents diagrams a) to d), which show the principles of a receiver in a single frequency network or system, and in a multi-frequency DAB system according to the invention;
Figure 2 shows a block diagram of a receiver according to the invention and based on rapid frequency shifts;
Figure 3 shows the block diagram of an embodiment of an adding receiver according to the invention; and
Figure 4 shows the block diagram of another embodiment of an adding receiver according to the invention.

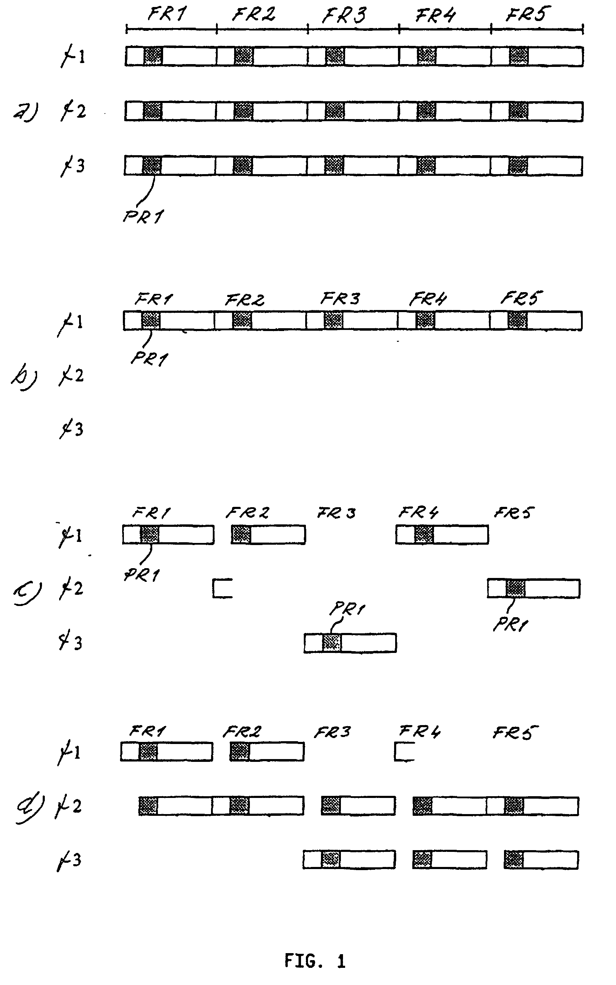

Figure 1 shows the differences of the receiving principles between substantially single frequency receiving and the multi-frequency digital broadcasting system according to the invention. Figure a) shows the signal entities received at the receiving point. A signal at frequency f1 can be a signal from one transmitter, or an added signal from several transmitters operating at the frequency f1. The OFDM signals transmitted from different transmitters on different frequencies have the same frame structure, and the transmitters are synchronized, i.e. the transmitters transmit simultaneously the same frames on different frequencies. The consecutive frames transmitted during the examined period are marked in the figure with reference numerals FR1 to FR5. The signals transmitted on different frequencies from all stations also have in the first place the same contents. In some applications some of the signals and frames contain a service or a program, which can be replaced by a local or a regional service. In figure 1 a desired service in a certain position of the frame is denoted by the reference numeral PR1. At least during that period all three frequencies have the same modulation.

The diagram b) of figure 1 shows how a receiver which is intended for substantially single frequency receiving operates in a multi-frequency network. When the receiver moves, the signal and interference levels on different frequencies will be changing. Even if the best signal could periodically be received on the frequency f2 or f3 this receiver will not try to shift the frequency, if the signal on frequency f1 still can be received. If the signal quality on frequency f1 deteriorates so much that it is impossible to receive, then the a receiver of this kind will try to shift to another frequency. However, then there will usually be an interruption with a length of several frames, which can be heard in the main receiving. On the other hand, it is not advantageous for a receiver operating in this way to shift frequencies very often, because after some time the signal on the frequency f1 could again be that one with the best quality.

The diagram c) of figure 1 shows a receiving principle based on rapid frequency shifts according to the invention. At first the service PR1 is received on the frequency f1. At the end of the frame FR1 the receiver shifts to the frequency f2 and receives then a first part of the frame FR2. From this the receiver determines the quality and timing of the signal transmitted on the frequency f2. Because the quality is not sufficiently high, the receiver returns to the frequency f1 for the duration of the program PR1 and receives the rest of the frame FR2 on this frequency. At the end of the frame FR2 the receiver switches to frequency f3. Because the signal quality is good, based on the first part of the frame FR3, the receiver stays on frequency f3 for the rest of the program PR1 and the frame FR3. At the beginning of frame FR4 the receiver measures the signal quality on frequency f1 and concludes to receive the rest of the program PR1 and the frame on this frequency. Correspondingly, the signal and the program PR1 is received on frequency f2 during the frame FR5.

The multi-frequency receiver according to the invention monitors the signal quality and timing on the other frequencies when the program PR1 selected to be received is not transmitted in the frame. Thus it can always switch to the best receiving frequency for the decoding period of the desired program PR1. The timing differences of the signals on different frequencies f1, f2 and f3 can exceed the protection period without disturbing the receiving process.

The diagram d) of figure 1 shows a possible principle of an adding multi-frequency receiver of the invention. In other respects an adding receiver operates in the same way as a receiver based on rapid frequency shifts, but it can receive and add signals simultaneously from a plurality of frequencies. When the adding receiver examines the signal quality it functions in the same way as a receiver based on rapid frequency shifts, but on a single frequency only. During the first part of the frame FR1 the receiver examines the frequency f1, but also switches to a second frequency f2 when the desired program PR1 is received. The receiver adds the program signals from the frequencies f1 and f2. During the frame FR2 the receiver first examines the frequency f2, and receives the program signals from frequencies f1 and f2 during the program PR1. During the frame FR3 the receiver examines the frequency f3 and decides to receive the program signals from the frequencies f2 and f3. At the beginning of frame FR4 the receiver examines the frequency f1, but decides to continue on frequencies f2 and f3. At the beginning of the frame FR5 it examines the signal on the frequency f2 and decides to continue to receive on the frequencies f2 and f3.

The above presented operating diagram of an adding multi-path receiver describes only one possible function, in which the receiver examines alternative frequencies during the first part of the frame before that part of the frame that contains the program PR1 to be received. Obviously, in order to examine the frequencies the receiver can as well use any other part of the frame, during which it does not receive a program signal.

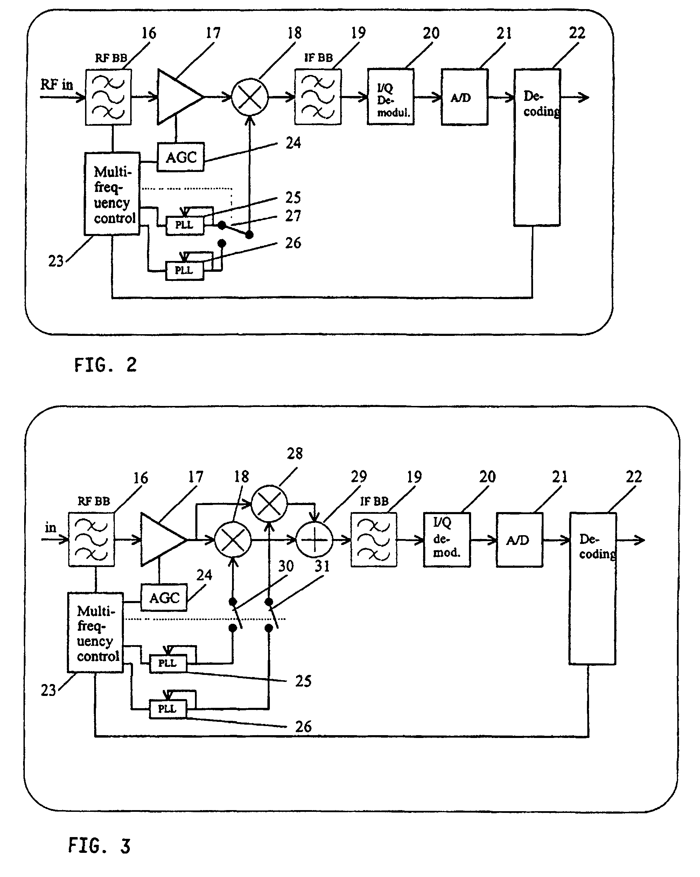

Figure 2 shows the block diagram of a receiver based on rapid frequency shifts. The received signal is filtered in a rapidly tunable filter 16, from where the signal is directed through a pre-amplifier 17 and a mixer 18 to the intermediate frequency filter 19. Then the signal is I/Q demodulated, A/D converted and decoded in the blocks 20, 21 and 22, respectively. The frequency shifts are controlled by a multi-frequency controller 23, which controls the tuning of the filter 16, the automatic gain control with the block 24, and the local oscillator phase locks 25 and 26, and the local oscillator selector 27.

Figure 3 shows a block diagram of an embodiment of an adding receiver according to the invention. The functions regarding the blocks 16 to 26 are in principle the same as in the receiver of figure 2. In order to enable simultaneous frequency receiving the circuit further has a second mixer 28 and adder 29 and local oscillator selectors 30 and 31. The received frequencies must be close to each other in order to fit within the pass-band of the filter 16.

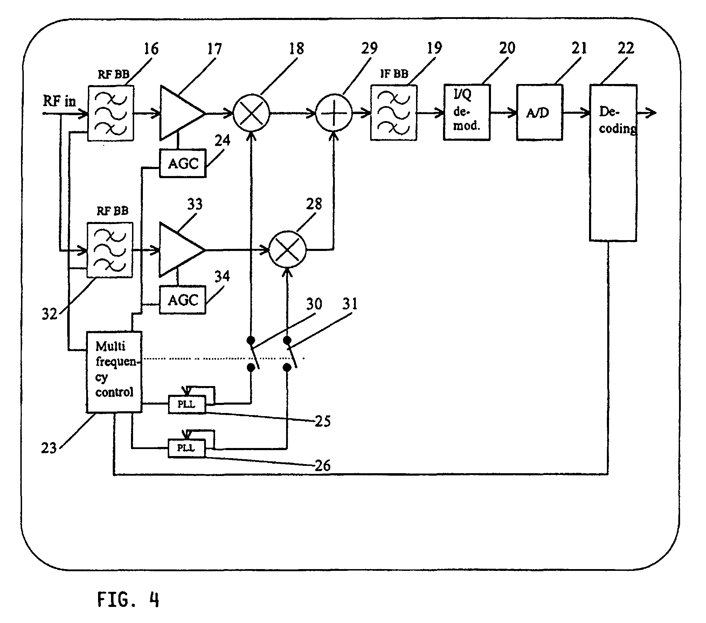

A receiver according to figure 4 containing several front stages is required, if the received frequencies are far from each other. The blocks 16 to 31 are according to figure 3. The extra front stage is formed by the filter 32, the pre-amplifier 33, and the automatic gain control 34.

Above we presented two principles with which it is possible to realize a receiver operating in the multi-frequency DAB system according to the invention. Obviously the solutions of the adding receiver according to figure 3 and 4 will not provide a substantially better performance than with a receiver based on rapid frequency shift according to figure 2. If for instance the delay difference between the desired program signals arriving on different frequencies to the receiver is too large, then the adding of them may only be a disadvantage.

In the following we describe in more detail how we can solve the above presented problems with the digital broadcasting system and with the receiving principles according to the invention. One central problem is to free a continuous frequency range in a very large area. With the multi-frequency DAB system according to the invention a part of the single frequency network transmitters can be replaced with transmitters operating on other frequencies in areas where the required frequencies can not easily be freed to be used by the single frequency network. A transmitter which does not operate on the main frequency of the single frequency network will "melt" into the network like a transmitter operating on the main frequency, because the multi-frequency receiver can shift frequencies without interruptions in the received data stream. Particularly at state borders there will be situations, where a transmitter in the territory of one state interferes with a single frequency network realized in the territory of another state, and there is no willingness to invest to replace the interfering transmitter. When the multi-frequency digital broadcasting system is used it is possible to find economical solutions to problems of this kind.

Another problem which is difficult to solve is the distribution of regional programs. In a single frequency network all signals must have the same content. If a program in the signal's frame structure is replaced with a local program, then the adjacent stations which transmit in the same position of the frame, will interfere with each other at the border of the broadcasting areas of local programs or a local program, and thus the service area of the local program will be very limited. With the aid of the multi-frequency system it will be possible to build a network, which is formed by small single frequency networks operating at different frequencies. The same frame structure is used within each small network. A part of the services contained in the frame can be distributed as common services in the area. Then a receiver will shift from one frequency to another when required, according to the diagrams of figure 1. On the other hand regional services, e.g. regional programs can be distributed in the area of each single frequency network. When a receiver able to identify the services by their unique service identifications receives these services it will not try to switch to a second frequency, because that part of the frame corresponding to the program it receives will contain a different program on that second frequency.

Several countries plan to construct digital broadcasting systems on the 1500 MHz frequency range. Then they have to use the transmission modes II or III due to the high frequency, and with these it is not possible to handle as long delays between the signals as with the transmission mode I. The multi-frequency digital broadcasting system provides new solutions also to this problem. If the signals from the different stations are on different frequencies, the receiver reads the OFDM symbols appearing on each frequency at a moment which provides the best result for that frequency. For instance, a network could be built with three or more frequencies, where adjacent transmitters do not use the same frequency.

The multi-frequency technique of the invention also finds applications in satellite systems. For instance shifting a transmission from one satellite to another without interruptions, or the construction of a terrestrial and satellite based network present application areas for the multi-frequency technique. The technique of the invention could apparently also be applied in digital television systems, as the OFDM is probably selected as the modulation method for the planned terrestrial digital television systems.

## Claims

1. A digital broadcasting system utilizing orthogonal frequency division multiplex (OFDM) and comprising
- a plurality of transmitters operating on a plurality of frequencies, each transmitter transmitting on its transmission frequency an OFDM signal having the same frame structure, whereby the frame structure contains several parts, in each of these parts as symbols formed by OFDM modulation, information containing a transmitted service is transmitted, and
- at least one receiver having means (16, 17, 18, 19) to receive and process OFDM signals and means (20, 21, 22) to demodulate the received and processed OFDM signals and to select and decode information transmitted in a part of the frame structure,
**characterized in that**
- a plurality of transmission frequencies (f1, f2, f3) formed by at least two frequencies are assigned to the system,
- each transmitter is arranged to transmit an OFDM signal of the broadcasting system on a transmission frequency which is selected among the plurality (f1, f2, f3) of frequencies assigned to the system and which can be freely used in the transmission area of the transmitter, and whereby the OFDM signals transmitted by different transmitters contain firstly a common OFDM modulation in corresponding parts of the frame structure and secondly a unique OFDM modulation in the remaining parts of the frame structure, and
- the receiver has means (16, 23, 24, 25, 26, 27, 28, 29, 30, 31, 32, 33, 34) to receive an OFDM signal of the broadcasting system from several transmitters at different frequencies (f1, f2, f3) either simultaneously and by adding these signals or substantially continuously alternating between them, whereby allowing two alternative functions, the first of which is that adding of the signals or switching between them is enabled or the second of which is that both adding of the signals and switching between them are disabled, and one of said two alternative functions is selected by a unique service identification received in the unique OFDM modulation parts.

2. The digital broadcasting system according to claim 1, in which the transmitters form a network covering a large area, **characterized in that** the first frequency (f1) is assigned to the transmitters in all regions where said first frequency can be freely used, and a second frequency (f2, f3) selected from the frequencies assigned to the system (f1, f2, f3) is assigned to the transmitters in the network's sub-regions where said first frequency (f1) can not be freely used, but where said second frequency (f2, f3) can be freely used.

3. The digital broadcasting system according to claim 1, in which the transmitters form a network covering a large area, **characterized in that** the transmitters are divided into groups covering sub-regions of a large area, whereby each group is assigned a frequency which is selected from the frequencies assigned to the system (f1, f2, f3) and which can be freely used in the sub-region covered by the transmitter group.

4. A digital broadcasting system according to claim 3, **characterized in that** an OFDM signal transmitted by a transmitter group covering a respective sub-region contains one or more parts of the frame structure in which parts the modulation is different from the modulation of the corresponding part in other sub-regions.

5. A receiver as defined in any previous claim, **characterized in that** it further comprises means (16, 23, 25, 26, 27) to receive an OFDM signal of the broadcasting system from several transmitters on a plurality of frequencies (f1, f2, f3) substantially continuously alternating between the frequencies, whereby allowing two alternative functions, the first of which is that alternating is enabled or the second of which is that alternating is disabled, and one of said two alternative functions is selected by a unique service identification received in the unique OFDM modulation parts.

6. A receiver according to claim 5 comprising a first band-pass filter (16) to filter a received OFDM signal, a pre-amplifier (17) to amplify a filtered OFDM signal, a mixer (18) to mix an amplified OFDM signal with a signal obtained from a local oscillator in order to generate an intermediate frequency, and a second band-pass filter (19) to filter the obtained intermediate frequency signal and to direct it to the demodulating means (20), **characterized in that** the first band-pass filter (16) is a rapidly tunable band-pass filter, and that the amplifier further comprises
- a plurality of controlled local oscillators with phase locks (25, 26),
- a switch (27) to select the local oscillator,
- control means (23) which control the first band-pass filter (16), the local oscillators and their phase locks (25, 26), and said switch (27) in order to monitor at different frequencies the quality of OFDM signals received at the receiver and to switch the receiving frequency rapidly during those parts of the frame structure of the OFDM signal, which are left outside that part containing the information selected by the receiver to be decoded.

7. A receiver as defined in any claim 1 to 4, **characterized in that** it further comprises means (16, 23, 25, 26, 27, 28, 30, 31, 32, 33, 34) for receiving an OFDM signal of the broadcasting system from several transmitters at a plurality of frequencies (f1, f2, f3) simultaneously and by adding these signals, whereby allowing two alternative functions, the first of which is that adding is enabled or the second of which is that adding is disabled, and one of said two alternative functions is selected by a unique service identification received in the unique OFDM modulation parts.

8. A receiver according to claim 7, comprising a first band-pass filter (16) to filter a received OFDM signal, a pre-amplifier (17) to amplify a filtered OFDM signal, a mixer (18) to mix an amplified OFDM signal with a signal obtained from a local oscillator in order to generate an intermediate frequency, and a second band-pass filter (19) to filter the obtained intermediate frequency signal and to direct it to the demodulating means (20), **characterized in that** the first band-pass filter (16) has a sufficiently wide pass-band to receive simultaneously several OFDM signals transmitted on adjacent frequencies, and that the amplifier further comprises
- in addition to the mixer (18) at least one other mixer (28), to which a received and pre-amplified OFDM signal also is directed,
- a plurality of controllable local oscillators with phase locks (25, 26),
- switches (30, 31) to select local oscillators (25, 26) and to connect them to the mixers (18, 28),
- an adder (29) to add the intermediate frequency signals obtained from the mixers and then to direct the added signal to the demodulator means (20), and
- control means (23) which control the first band-pass filter (16), the local oscillators and their phase locks (25, 26), and said switches (30, 31) in order to receive simultaneously several OFDM signals at different frequencies and to add these signals.

9. The receiver according to claim 7, comprising a first band-pass filter (16) to filter a received OFDM signal, a pre-amplifier (17) to amplify a filtered OFDM signal, a mixer (18) to mix an amplified OFDM signal with a signal obtained from a local oscillator in order to generate an intermediate frequency, and a second band-pass filter (19) to filter the obtained intermediate frequency signal and to direct it to the demodulating means (20), **characterized in that** it further comprises
- in addition to the first band-pass filter (16), the pre-amplifier (17) and the mixer at least one band-pass filter (32), pre-amplifier (33) and mixer (34) connected in parallel with them for a corresponding processing of an OFDM signal received on another frequency,
- a plurality of controlled local oscillators with phase locks (25, 26),
- switches (30, 31) to select the local oscillator (25, 26) and to connect it to the mixers (18, 28),
- an adder (29) to add the intermediate frequency signals obtained from the mixers and then to direct the added signal to the demodulator means (20), and
- control means (23) which control the first band-pass filters (16, 32), the local oscillators and their phase locks (25, 26), and said switches (30, 31) in order to receive simultaneously several OFDM signals at different frequencies and to add these signals.

## Patentansprüche

1. Digitales Rundfunksystem, welches das orthogonale Frequenzteilungsmultiplex (OFDM) verwendet und umfasst:
- eine Vielzahl von Sendern, die auf einer Vielzahl von Frequenzen arbeiten, wobei jeder Sender auf seiner Übertragungsfrequenz ein OFDM-Signal sendet, das die gleiche Rahmenstruktur hat, wobei die Rahmenstruktur mehrere Teile enthält, in jedem dieser Teile als Zeichen, die durch OFDM-Modulation gebildet sind, wobei die Informationen, die einen übertragenen Dienst enthalten, übertragen sind, und
- mindestens einen Empfänger mit Vorrichtungen (16, 17, 18, 19), um OFDM-Signale zu empfangen und zu verarbeiten, und Vorrichtungen (20, 21, 22), um die empfangenen OFDM-Signale zu demodulieren und zu verarbeiten, und die Informationen auszuwählen und zu decodieren, die als ein Teil der Rahmenstruktur übertragen sind,
**dadurch gekennzeichnet, dass**
- eine Vielzahl von Übertragungsfrequenzen (f1, f2, f3), die durch mindestens zwei Frequenzen gebildet ist, dem System zugeordnet sind,
- jeder Sender angeordnet ist, um ein OFDM-Signal des Rundfunksystems auf einer Übertragungsfrequenz zu übertragen, welche aus der Vielzahl (f1, f2, f3) von Frequenzen ausgewählt ist, die dem System zugeordnet ist, und welche frei in dem Sendegebiet des Senders verwendet werden kann, und wobei die OFDM-Signale, die von verschiedenen Sendern übertragen sind, erstens eine allgemeine OFDM-Modulation in entsprechenden Teilen der Rahmenstruktur, und zweitens eine eindeutige OFDM-Modulation in den restlichen Teilen der Rahmenstruktur enthalten, und
- der Empfänger Vorrichtungen (16, 23, 24, 25, 26, 27, 28, 29, 30, 31, 32, 33, 34) aufweist, um das OFDM-Signal des Rundfunksystems von verschiedenen Sendern bei verschiedenen Frequenzen (f1, f2, f3) entweder gleichzeitig und durch Summieren dieser Signale oder im wesentlich kontinuierlich durch Wechseln zwischen ihnen zu empfangen, wobei zwei alternative Funktionen zulässig sind, von denen die erste ist, dass das Summieren der Signale bzw. das Umschalten zwischen ihnen freigegeben ist, bzw. von denen die zweite ist, dass sowohl das Summieren der Signale, als auch das Umschalten zwischen ihnen gesperrt ist, und eine der zwei alternativen Funktionen durch eine eindeutige Dienstkennung ausgewählt ist, die in den eindeutigen OFDM-Modulationsteilen empfangen ist.

2. Digitales Rundfunksystem nach Anspruch 1, in welchem die Sender ein Netz bilden, das ein großes Gebiet versorgt, **dadurch gekennzeichnet, dass** die erste Frequenz (f1) den Sendern in allen Regionen zugeordnet ist, wo die erste Frequenz frei verwendet werden kann, und eine zweite Frequenz (f2, f3), die aus den Frequenzen ausgewählt ist, die dem System (f1, f2, f3) zugeordnet sind, den Sendern in den Unterregionen des Netzes zugeordnet ist, wobei die erste Frequenz (f1) nicht frei verwendet werden kann, wobei aber die zweite Frequenz (f2, f3) frei verwendet werden kann.

3. Digitales Rundfunksystem nach Anspruch 1, in welchem die Sender ein Netz bilden, das ein großes Gebiet versorgt, **dadurch gekennzeichnet, dass** die Sender in Gruppen unterteilt sind, die Unterregionen eines großen Gebietes versorgen, wobei jeder Gruppe eine Frequenz zugeordnet ist, welche aus den Frequenzen ausgewählt ist, die dem System (f1, f2, f3) zugeordnet sind, und welche frei in der Unterregion verwendet werden kann, die durch die Sendergruppe versorgt wird.

4. Digitales Rundfunksystem nach Anspruch 3, **dadurch gekennzeichnet, dass** ein OFDM-Signal, das von einer Sendergruppe übertragen ist, welche eine entsprechende Unterregion versorgt, einen bzw. mehr Teile der Rahmenstruktur enthält, in welcher die Modulation von der Modulation des entsprechenden Teils in anderen Unterregionen verschieden ist.

5. Empfänger, wie in jedem vorangegangenen Anspruch definiert, **dadurch gekennzeichnet, dass** er außerdem Vorrichtungen (16, 23, 25, 26, 27) umfasst, um ein OFDM-Signal des Rundfunksystems von verschiedenen Sendern auf einer Vielzahl von Frequenzen (f1, f2, f3) im wesentlichen kontinuierlich durch Wechseln zwischen den Frequenzen zu empfangen, wobei zwei alternative Funktionen zulässig sind, von denen die erste ist, dass das Wechseln freigegeben ist, und eine der zwei alternativen Funktionen durch eine eindeutige Dienstkennung ausgewählt ist, die in den eindeutigen OFDM-Modulationsteilen empfangen ist.

6. Empfänger nach Anspruch 5, umfassend ein erstes Bandpassfilter (16), um ein empfangenes OFDM-Signal zu filtern, einen Vorverstärker (17), um ein gefiltertes OFDM-Signal zu verstärken, einen Mischer (18), um ein verstärktes OFDM-Signal mit einem Signal zu mischen, das von einem lokalen Oszillator erhalten ist, um eine Zwischenfrequenz zu generieren, und ein zweites Bandpassfilter (19), um das erhaltene Zwischenfrequenzsignal zu filtern und es an die Demodulationsvorrichtung (20) zu leiten, **dadurch gekennzeichnet, dass** in dem ersten Bandpassfilter (16) ein schnell durchstimmbares Bandpassfilter vorhanden ist, und dass der Verstärker außerdem umfasst
- eine Vielzahl geregelter lokaler Oszillatoren mit Phasenkopplungen (25, 26),
- einen Schalter (27), um den lokalen Oszillator auszuwählen,
- Regeleinrichtungen (23), welche das erste Bandpassfilter (16), die lokalen Oszillatoren und deren Phasenkopplungen (25, 26) regeln, und den Schalter (27), um bei verschiedenen Frequenzen die Güte der OFDM-Signale zu überwachen, die am Empfänger empfangen sind, und um die Empfangsfrequenz während jener Teile der Rahmenstruktur des OFDM-Signals umzuschalten, die außerhalb des Teils geblieben sind, der die Informationen enthält, die vom zu decodierenden Empfänger ausgewählt sind.

7. Empfänger, wie in jedem Anspruch 1 bis 4 definiert, **dadurch gekennzeichnet, dass** er außerdem Vorrichtungen (16, 23, 25, 26, 27, 28, 30,31,32, 33, 34) für das Empfangen eines OFDM-Signals des Rundfunksystems von verschiedenen Sendern auf einer Vielzahl von Frequenzen (f1, f2, f3) gleichzeitig und durch Summieren dieser Signale umfasst, wobei zwei alternative Funktionen zulässig sind, von denen die erste ist, dass das Summieren freigegeben ist, bzw. von denen die zweite ist, dass das Summieren gesperrt ist, und eine der zwei alternativen Funktionen durch eine eindeutige Dienstkennung ausgewählt ist, die in den eindeutigen OFDM-Modulationsteilen empfangen ist.

8. Empfänger nach Anspruch 7, umfassend ein erstes Bandpassfilter (16), um ein empfangenes OFDM-Signal zu filtern, einen Vorverstärker (17), um ein gefiltertes OFDM-Signal zu verstärken, einen Mischer (18), um ein verstärktes OFDM-Signal mit einem Signal zu mischen, das von einem lokalen Oszillator erhalten ist, um eine Zwischenfrequenz zu generieren, und ein zweites Bandpassfilter (19), um das erhaltene Zwischenfrequenzsignal zu filtern und es an die Demodulationsvorrichtungen (20) zu leiten, **dadurch gekennzeichnet, dass** das erste Bandpassfilter (16) einen ausreichend breiten Durchlassbereich aufweist, um gleichzeitig mehrere OFDM-Signale zu empfangen, die auf den benachbarten Frequenzen übertragen sind, und dass der Verstärker außerdem umfasst
- außer dem Mischer (18) mindestens einen Mischer (28), an den ein empfangenes und vorverstärktes OFDM-Signal ebenfalls geleitet ist,
- eine Vielzahl regelbarer lokaler Oszillatoren mit Phasenkopplungen (25, 26),
- Schalter (30, 31), um lokale Oszillatoren (25, 26) auszuwählen, und sie mit den Mischern (18, 28) zu verbinden,
- einen Summierer (29), um die Zwischenfrequenzsignale zu summieren, die von den Mischern erhalten sind, und um danach das summierte Signal an die Demodulatorvorrichtungen (20) zu leiten, und
- Regeleinrichtungen (23), welche das erste Bandpassfilter (16), die lokalen Oszillatoren und deren Phasenkopplungen (25, 26) regeln, und die Schalter (30, 31), um gleichzeitig mehrere OFDM-Signale bei verschiedenen Frequenzen zu empfangen, und um diese Signale zu summieren.

9. Empfänger nach Anspruch 7, umfassend ein erstes Bandpassfilter (16), um ein empfangenes OFDM-Signal zu filtern, einen Vorverstärker (17), um ein gefiltertes OFDM-Signal zu verstärken, einen Mischer (18), um ein verstärktes OFDM-Signal mit einem Signal zu mischen, das von einem lokalen Oszillator erhalten ist, um eine Zwischenfrequenz zu generieren, und ein zweites Bandpassfilter (19), um das erhaltene Zwischenfrequenzsignal zu filtern und es an die Demodulationsvorrichtungen (20) zu leiten, **dadurch gekennzeichnet, dass** er außerdem umfasst
- außer dem ersten Bandpassfilter (16), dem Vorverstärker (17) und dem Mischer mindestens ein Bandpassfilter (32), Vorverstärker (33) und Mischer (34), die parallel mit denen für eine entsprechende Verarbeitung eines OFDM-Signals verbunden sind, das auf einer anderen Frequenz empfangen ist,
- eine Vielzahl geregelter lokaler Oszillatoren mit Phasenkopplungen (25, 26),
- Schalter (30, 31), um den lokalen Oszillator (25, 26) auszuwählen, und ihn mit den Mischern (18, 28) zu verbinden,
- einen Summierer (29), um die Zwischenfrequenzsignale zu summieren, die von den Mischern erhalten sind, und um danach das summierte Signal an die Demodulatorvorrichtungen (20) zu leiten, und
- Regeleinrichtungen (23), welche das erste Bandpassfilter (16, 32), die lokalen Oszillatoren und deren Phasenkopplungen (25, 26) regeln, und die Schalter (30, 31), um gleichzeitig mehrere OFDM-Signale bei verschiedenen Frequenzen zu empfangen, und um diese Signale zu summieren.

## Revendications

1. Système de radiodiffusion numérique utilisant le multiplexage par répartition en fréquence orthogonale (MRFO) et comprenant :
- une pluralité d'émetteurs fonctionnant sur une pluralité de fréquences, chaque émetteur émettant, sur sa fréquence d'émission, un signal MRFO présentant la même structure de trame, de telle manière que la structure de trame contienne plusieurs parties, dans chacune de ces parties, en tant que symboles formés par modulation MRFO, des informations contenant un service transmis étant transmises, et
- au moins un récepteur comportant des moyens (16, 17, 18, 19) afin de recevoir et de traiter des signaux MRFO et des moyens (20, 21, 22) afin de démoduler les signaux MRFO reçus et traités et afin de sélectionner et de décoder les informations transmises dans une partie de la structure de trame,
**caractérisé en ce que**
- une pluralité de fréquences d'émission (f1, f2, f3) constituées d'au moins deux fréquences sont attribuées au système,
- chaque émetteur est agencé pour émettre un signal MRFO du système de radiodiffusion sur une fréquence d'émission qui est sélectionnée parmi la pluralité (f1, f2, f3) de fréquences attribuées au système et qui peut être utilisée librement dans la zone de transmission de l'émetteur, et de telle manière que les signaux MRFO émis par différents émetteurs contiennent, premièrement, une modulation MRFO commune dans des parties correspondantes de la structure de trame et, deuxièmement, une modulation MRFO unique dans les parties restantes de la structure de trame, et
- le récepteur comporte des moyens (16, 23, 24, 25, 26, 27, 28, 29, 30, 31, 32, 33, 34) afin de recevoir un signal MRFO du système de radiodiffusion de plusieurs émetteurs à différentes fréquences (f1, f2, f3) soit simultanément et en additionnant ces signaux, soit en alternant sensiblement continuellement entre eux, de manière à permettre deux fonctions alternatives, la première d'entre elles étant que l'addition des signaux ou la commutation entre eux est activée ou la deuxième d'entre elles étant que l'addition des signaux et la commutation entre eux sont toutes deux désactivées, et l'une desdites deux fonctions alternatives est sélectionnée par une identification de service unique reçue dans les parties de modulation MRFO uniques.

2. Système de radiodiffusion numérique selon la revendication 1, dans lequel les émetteurs forment un réseau couvrant une grande zone,
**caractérisé en ce que** la première fréquence (f1) est attribuée aux émetteurs dans toutes les régions où ladite première fréquence peut être utilisée librement, et une deuxième fréquence (f2, f3) sélectionnée parmi les fréquences attribuées au système (f1, f2, f3) est attribuée aux émetteurs dans les sous-régions du réseau où ladite première fréquence (f1) ne peut pas être utilisée librement, mais où ladite deuxième fréquence (f2, f3) peut être utilisée librement.

3. Système de radiodiffusion numérique selon la revendication 1, dans lequel les émetteurs forment un réseau couvrant une grande zone,
**caractérisé en ce que** les émetteurs sont divisés en groupes couvrant des sous-régions d'une grande zone, de telle manière que chaque groupe reçoive une fréquence qui est sélectionnée parmi les fréquences attribuées au système (f1, f2, f3) et qui peut être utilisée librement dans la sous-région couverte par le groupe d'émetteurs.

4. Système de radiodiffusion numérique selon la revendication 3,
**caractérisé en ce qu'**un signal MRFO émis par un groupe d'émetteurs couvrant une sous-région respective contient une ou plusieurs parties de la structure de trame dans lesquelles parties la modulation est différente de la modulation de la partie correspondante dans d'autres sous-régions.

5. Récepteur selon l'une quelconque des revendications précédentes,
**caractérisé en ce qu'**il comprend, en outre, des moyens (16, 23, 25, 26, 27) afin de recevoir un signal MRFO du système de radiodiffusion de plusieurs émetteurs sur une pluralité de fréquences (f1, f2, f3) en alternant sensiblement continuellement entre les fréquences, de manière à permettre deux fonctions alternatives, la première d'entre elles étant que l'alternance est activée ou la deuxième étant que l'alternance est désactivée, et l'une desdites deux fonctions alternatives est sélectionnée par une identification de service unique reçue dans les parties de modulation MRFO uniques.

6. Récepteur selon la revendication 5, comprenant un premier filtre passe-bande (16) afin de filtrer un signal MRFO reçu, un préamplificateur (17) afin d'amplifier un signal MRFO filtré, un mélangeur (18) afin de mélanger un signal MRFO amplifié avec un signal obtenu d'un oscillateur local afin de générer une fréquence intermédiaire, et un deuxième filtre passe-bande (19) afin de filtrer le signal de fréquence intermédiaire obtenu et de le diriger vers les moyens de démodulation (20), **caractérisé en ce que** le premier filtre passe-bande (16) est un filtre passe-bande rapidement accordable, et **en ce que** l'amplificateur comprend en outre :
- une pluralité d'oscillateurs locaux commandés avec des verrouillages de phase (25, 26),
- un commutateur (27) afin de sélectionner l'oscillateur local,
- des moyens de commande (23) qui commandent le premier filtre passe-bande (16), les oscillateurs locaux et leurs verrouillages de phase (25, 26), et ledit commutateur (27) afin de surveiller, à différentes fréquences, la qualité des signaux MRFO reçus au niveau du récepteur et de commuter la fréquence de réception rapidement pendant les parties de la structure de trame du signal MRFO qui sont laissées en dehors de la partie contenant les informations sélectionnées par le récepteur pour être décodées.

7. Récepteur selon l'une quelconque des revendications 1 à 4,
**caractérisé en ce qu'**il comprend, en outre, des moyens (16, 23, 25, 26, 27, 28, 30, 31, 32, 33, 34) pour recevoir un signal MRFO du système de radiodiffusion de plusieurs émetteurs à une pluralité de fréquences (f1, f2, f3) simultanément et en additionnant ces signaux, de manière à permettre deux fonctions alternatives, la première d'entre elles étant que l'addition est activée ou la deuxième étant que l'addition est désactivée, et l'une desdites deux fonctions alternatives est sélectionnée par une identification de service unique reçue dans les parties de modulation MRFO uniques.

8. Récepteur selon la revendication 7, comprenant un premier filtre passe-bande (16) afin de filtrer un signal MRFO reçu, un préamplificateur (17) afin d'amplifier un signal MRFO filtré, un mélangeur (18) afin de mélanger un signal MRFO amplifié avec un signal obtenu d'un oscillateur local afin de générer une fréquence intermédiaire, et un deuxième filtre passe-bande (19) afin de filtrer le signal de fréquence intermédiaire obtenu et de le diriger vers les moyens de démodulation (20),
**caractérisé en ce que** le premier filtre passe-bande (16) a une bande passante suffisamment large pour recevoir simultanément plusieurs signaux MRFO émis sur des fréquences adjacentes, et **en ce que** l'amplificateur comprend en outre :
- en plus du mélangeur (18), au moins un autre mélangeur (28), vers lequel un signal MRFO reçu et pré-amplifié est également dirigé,
- une pluralité d'oscillateurs locaux commandables avec des verrouillages de phase (25, 26),
- des commutateurs (30, 31) afin de sélectionner des oscillateurs locaux (25, 26) et de les connecter aux mélangeurs (18, 28),
- un additionneur (29) afin d'additionner les signaux de fréquence intermédiaire obtenus des mélangeurs et de diriger ensuite le signal d'addition vers les moyens de démodulation (20), et
- des moyens de commande (23) qui commandent le premier filtre passe-bande (16), les oscillateurs locaux et leurs verrouillages de phase (25, 26), et lesdits commutateurs (30, 31) afin de recevoir simultanément plusieurs signaux MRFO à différentes fréquences et d'additionner ces signaux.

9. Récepteur selon la revendication 7, comprenant un premier filtre passe-bande (16) afin de filtrer un signal MRFO reçu, un préamplificateur (17) afin d'amplifier un signal MRFO filtré, un mélangeur (18) afin de mélanger un signal MRFO amplifié avec un signal obtenu d'un oscillateur local afin de générer une fréquence intermédiaire, et un deuxième filtre passe-bande (19) afin de filtrer le signal de fréquence intermédiaire obtenu et de le diriger vers les moyens de démodulation (20), **caractérisé en ce qu'**il comprend en outre :
- en plus du premier filtre passe-bande (16), du préamplificateur (17) et du mélangeur, au moins un filtre passe-bande (32), un préamplificateur (33) et un mélangeur (34) connectés en parallèle avec eux pour un traitement correspondant d'un signal MRFO reçu sur une autre fréquence,
- une pluralité d'oscillateurs locaux commandés avec des verrouillages de phase (25, 26),
- des commutateurs (30, 31) afin de sélectionner l'oscillateur local (25, 26) et de le connecter aux mélangeurs (18, 28);
- un additionneur (29) afin d'additionner les signaux de fréquence intermédiaire obtenus des mélangeurs et de diriger ensuite le signal d'addition vers les moyens de démodulation (20), et
- des moyens de commande (23) qui commandent les premiers filtres passe-bande (16, 32), les oscillateurs locaux et leurs verrouillages de phase (25, 26), et lesdits commutateurs (30, 31) afin de recevoir simultanément plusieurs signaux MRFO à différentes fréquences et d'additionner ces signaux.
